# FASCICULE DE BREVET EUROPEEN

(11) **EP 3 217 181 B1**
(45) Date de publication et mention de la délivrance du brevet: **08.08.2018**
(21) Numéro de dépôt: 17160255.0
(22) Date de dépôt: 10.03.2017
(51) Int. Cl.: G01P 15/12, G01P 15/08

(54) **ACCELEROMETRE LINEAIRE AMORTI**
GEDÄMPFTER LINEARER BESCHLEUNIGUNGSMESSER
DAMPED LINEAR ACCELEROMETER

(30) Priorité: 11.03.2016 FR 1652048
(43) Date de publication de la demande: 13.09.2017
(73) Titulaire: Commissariat à l'énergie atomique et aux énergies alternatives, 75015 Paris (FR)
(72) Inventeur: FAIN, Bruno, 38000 GRENOBLE (FR); CHAEHOI, Aboubacar, 38100 GRENOBLE (FR); ROBERT, Philippe, 38000 GRENOBLE (FR)
(74) Mandataire: Brevalex

(56) Documents cités:
- EP-A2- 0 981 052
- EP-A2- 2 151 691
- EP-A2- 2 455 329
- US-A1- 2003 094 881

## Description

La présente invention se rapport à un accéléromètre linéaire MEMS et/ou NEMS amorti.

Un accéléromètre microélectromécanique ou MEMS (Microelectromechanical Systems en terminologie anglo-saxonne) et/ou nanoélectromécanique ou NEMS (Nanoelectromechanical System) est destiné à détecter des accélérations. Il comporte une partie suspendue ou masse suspendue par rapport à un support et des moyens de détection du déplacement de la masse. Les accélérations subies par l'accéléromètre mettent en mouvement la masse par rapport au support, ce mouvement est détecté par les moyens de détection, les caractéristiques de ce mouvement sont traitées et une accélération en est déduite.

Or, si l'accéléromètre est exposé à un environnement vibratoire sévère, il est susceptible de présenter un fonctionnement dégradé, voire d'être endommagé de manière irréversible.

Plusieurs solutions ont été développées pour réduire ce risque d'endommagement.

L'électronique de l'accéléromètre peut être telle qu'un filtrage adapté est réalisé. Cette solution n'est pas adaptée lorsque les vibrations indésirables sont à la même fréquence que la fréquence d'intérêt. En outre, un filtrage électronique ne permet pas de protéger la structure mécanique de l'accéléromètre.

Une autre solution consiste à supprimer les vibrations en réalisant une structure mécanique de l'accéléromètre adaptée. Une telle structure comporte en général un cadre de découplage mécanique entre le support et la masse mobile. Les propriétés mécaniques de ce cadre de découplage déterminent quelles vibrations sont filtrées. La conception usuelle des structures de découplage (faible raideur) permet de filtrer les vibrations aux fréquences supérieures à 1 kHz, mais ne sont pas adaptées aux filtrages des vibrations aux fréquences inférieures à 1kHz. Il en résulte que les vibrations aux fréquences inférieures à 1 kHz, notamment en-dessous de 100 Hz, ne sont pas filtrées dans cette solution et sont donc détectées.

Une autre solution consiste à réaliser une structure d'accéléromètre qui soit peu ou pas sensible aux vibrations. Par exemple, la structure peut être telle qu'elle présente des modes de déformation mécanique insensibles aux vibrations. Une autre approche consiste à contrôler la réponse en fréquence du MEMS, ce qui permet de diminuer sa sensibilité à certaines fréquences, par exemple la fréquence de résonance peut être diminuée pour s'affranchir des vibrations aux fréquences supérieures.

Le document Encapsulated submillimeter piezoresistive Accelerometers", W. Park, A. Partridge, R. N. Candler, V. Ayanoor-vitikkate, G. Yama, M. Lutz, and T. W. Kenny, Journal of Microelectromechanical Systems, vol. 15, no. 3, p507 (2006*)* décrit un accéléromètre encapsulé pour réaliser un accéléromètre amorti afin de minimiser notamment les chocs d'excitation à la fréquence de résonance.

### EXPOSÉ DE L'INVENTION

Le but de la présente invention est d'offrir un accéléromètre linéaire offrant une sensibilité réduite aux hautes fréquences en réduisant la bande passante tout en présentant une bonne résolution.

Le but énoncé ci-dessus est atteint par un accéléromètre comportant une partie mobile et une partie fixe, ladite partie mobile étant mobile en rotation et présentant un centre de gravité distinct du centre de rotation de la partie mobile, des moyens de détection du déplacement de la partie mobile et des moyens aptes à générer un amortissement visqueux à la partie mobile, les moyens aptes à générer un amortissement visqueux étant répartis entre le partie mobile et la partie fixe.

Du fait de la mise en oeuvre d'une partie mobile en rotation dont le centre de gravité est distinct de l'axe de rotation, les accélérations linéaires sont détectées.

Une telle structure permet d'offrir sur une surface réduite une masse importante permettant de conserver une bonne résolution tout en permettant de générer un amortissement important.

Dans un exemple avantageux, l'amortissement s'applique sur la périphérie extérieure de la partie mobile. Le fonctionnement en rotation permet de bénéficier d'un bras de levier important pour les forces appliquées sur la périphérie extérieure de la partie mobile, par exemple des forces d'amortissement. En outre il est possible de mettre en oeuvre un grand nombre de moyens d'amortissement visqueux, avantageusement sur toute la circonférence de la partie mobile, ce qui permet de générer un amortissement visqueux important et ceci dans un encombrement réduit. On peut donc avantageusement offrir un accéléromètre compact avec un amortissement important.

En associant partie mobile en rotation et amortissement visqueux, on réalise un accéléromètre linéaire offrant un amortissement important dont la sensibilité aux hautes fréquences est réduite sans perdre en résolution.

De manière très avantageuse, les moyens d'amortissement visqueux sont des peignes interdigités répartis sur toute la périphérie extérieure de la partie mobile. De manière avantageuse, les moyens de détection sont distincts des moyens d'amortissement et sont par exemple de type piézorésistif. De préférence, la partie mobile est suspendue par rapport à la partie fixe dans une zone différente de la zone comportant les moyens d'amortissement, cette zone comportant les moyens de détection. En utilisant différents emplacements de la structure pour l'amortissement et pour la détection, l'encombrement est encore réduit.

Il sera compris que les moyens de détection peuvent être également de type capacitif ou piézoélectrique. Par ailleurs dans certains cas, les moyens de détection sont confondus avec les moyens d'amortissement.

Un exemple de réalisation très avantageux combine une masse mobile en rotation, des peignes d'amortissement sur toute la périphérie de la masse mobile et un ancrage de la partie mobile au centre et une détection piézorésistive, on peut alors obtenir un accéléromètre de surface totale limitée qui présente néanmoins la surface requise pour obtenir le meilleur compromis entre fréquence de coupure, résolution et surface.

La présente invention a alors pour objet un accéléromètre linéaire comportant une partie fixe, une partie mobile en rotation dans le plan de l'accéléromètre autour d'un axe de rotation orthogonal au plan de l'accéléromètre, la partie mobile comportant un centre de gravité distinct du point d'intersection de l'axe de rotation et du plan de l'accéléromètre, des moyens de suspension entre la partie mobile et la partie fixe, formant une liaison pivot entre la partie mobile et la partie fixe et limitant des déplacements en translation de la partie mobile par rapport à la partie fixe, des moyens de détection du déplacement de la partie mobile par rapport à la partie fixe, des moyens d'amortissement visqueux du déplacement de la partie mobile dans ledit plan, lesdits moyens d'amortissement visqueux comportant des peignes interdigités, au moins un premier peigne sur la partie mobile et au moins un deuxième peigne sur la partie fixe, le premier peigne et le deuxième peigne étant interdigités.

Dans la présente demande, on entend par « peignes interdigités » des peignes mobiles l'une par rapport à l'autre de sorte à ce qu'ils soient soit à variation de surface, soit à variation d'entrefer

De préférence, les moyens de détection sont distincts des moyens d'amortissement visqueux.

Dans un exemple avantageux, la partie fixe comporte au moins une portion extérieure entourant la partie mobile et les moyens d'amortissement visqueux bordent une partie au moins de la périphérie de la partie mobile.

Dans un exemple préféré, les moyens d'amortissement visqueux bordent toute la périphérie de la partie mobile.

Le au moins un deuxième peigne de la partie fixe et le au moins un premier peigne de la partie mobile sont avantageusement au même potentiel électrique. De préférence, le au moins un deuxième peigne de la partie fixe et le au moins un premier peigne de la partie mobile sont en permanence au même potentiel électrique.

De préférence, toute la portion extérieure de la partie fixe est au même potentiel électrique que la partie mobile. De manière encore préférée, toute la portion extérieure de la partie fixe est en permanence au même potentiel électrique que la partie mobile.

Dans un exemple de réalisation, la partie mobile a une forme de disque et le premier peigne comporte des doigts s'étendant radialement vers l'extérieur de la partie mobile et le deuxième peigne comporte des doigts s'étendant radialement de la portion extérieure de la partie fixe vers la partie mobile.

De manière préférée, les doigts du premier peigne et les doigts du deuxième peigne sont tels qu'ils présentent une symétrie centrale par rapport à l'axe de rotation de la partie mobile.

En position repos de la partie mobile, chaque doigt de la partie mobile comportant au moins deux faces, chaque face étant en regard d'une face d'un doigt de la partie fixe et à une distance donnée de celle-ci, la distance donnée est avantageusement identique pour les deux faces du doigt.

La partie mobile peut comporter un évidement et la partie fixe peut comporter une portion intérieure disposée dans ledit évidement et tout ou partie des moyens de suspension suspendent la partie mobile à la portion intérieure de la partie fixe.

Dans un exemple de réalisation, les moyens de suspension comportent au moins deux poutres s'étendant entre la partie mobile et la portion intérieure, lesdites poutres s'étendant selon deux directions faisant un angle non nul, compris entre 0° et 180° et avantageusement égal à 90°, lesdites directions se croissant sensiblement au point d'intersection de l'axe de rotation et du plan de l'accéléromètre

Les moyens de détection peuvent être des moyens piézorésistifs. De préférence, les moyens de détection comportent au moins deux jauges montées en différentielle, lesdites jauges étant alignées le long d'un axe perpendiculaire à un axe passant par le centre de gravité de la partie mobile et le point d'intersection de l'axe de rotation et du plan de l'accéléromètre.

La portion intérieure de la partie fixe peut avantageusement comporter plusieurs zones électriquement indépendantes permettant une mesure « 4 fils » des résistances des jauges.

Selon une caractéristique additionnelle, l'accéléromètre linéaire comporte une cavité dans laquelle sont logées la partie mobile et la partie fixe et dans laquelle le niveau de pression est contrôlé. La cavité peut être avantageusement remplie d'un gaz neutre visqueux, par exemple du xénon ou de l'argon.

### BRÈVE DESCRIPTION DES DESSINS

La présente invention sera mieux comprise sur la base de la description qui va suivre et des dessins en annexe sur lesquels:
- la figure 1 est une vue de dessus d'un exemple de réalisation de l'accéléromètre selon l'invention partiellement représenté,
- la figure 2 est une vue de détail des moyens de connexion entre la partie fixe et la partie mobile de l'accéléromètre de la figure 1 et des moyens de détection,
- la figure 3 est une vue de détail schématique des moyens d'amortissement visqueux de l'accéléromètre de la figure 1,
- Les figures 4A à 4J sont des représentations schématiques de différentes étapes d'un exemple d'un procédé de réalisation de l'accéléromètre de la figure 1,
- les figures 5A et 5B sont des vues de dessus et de détail d'un exemple de réalisation d'un accéléromètre à détection capacitive,
- la figure 6 est une vue de dessus d'un autre exemple d'accéléromètre à détection capacitive,
- les figures 7A et 7B sont des vues de dessus et de détail d'un exemple de réalisation d'un accéléromètre à détection capacitive et à amortissement capacitif à variation de surface.

### EXPOSÉ DÉTAILLÉ DE MODES DE RÉALISATION PARTICULIERS

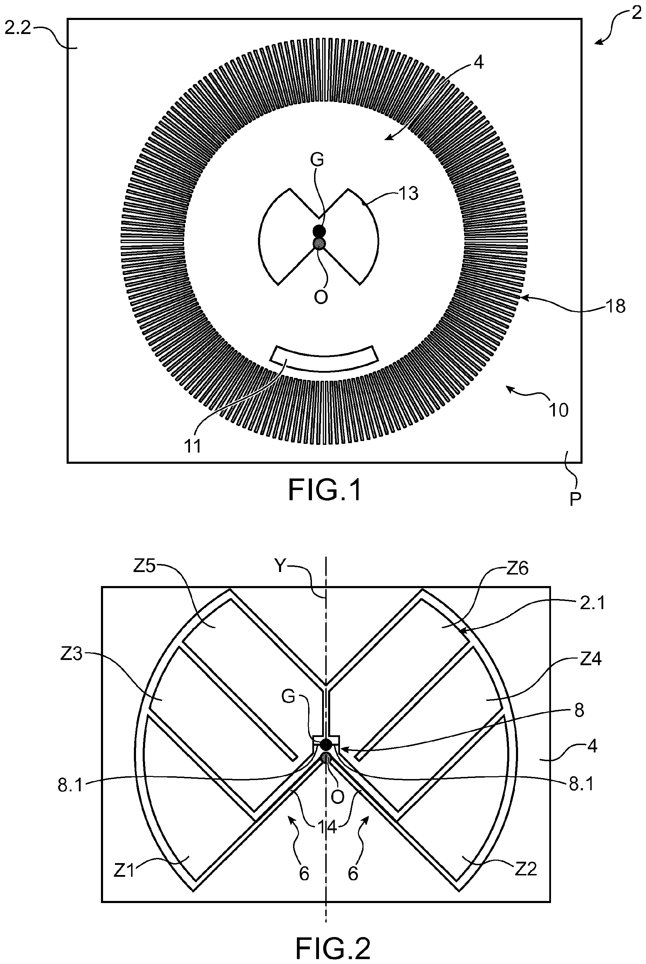

Sur la figure 1, on peut voir un exemple de réalisation d'un accéléromètre linéaire selon l'invention. L'accéléromètre est un accéléromètre microélectromécanique ou MEMS et/ou nanoélectromécanique ou NEMS. A des fins de simplicité il sera fait mention dans la suite de la description d'un accéléromètre MEMS ou un capteur MEMS.

L'accéléromètre est destiné à détecter et mesurer les accélérations linéaires. Par exemple il détecte les accélérations ACC orientées suivant la direction représentée sur la figure 1.

L'accéléromètre MEMS s'étend dans un plan P, ce plan est le plan moyen de l'accéléromètre. L'accéléromètre comporte une partie fixe 2 et une partie mobile ou masse 4 qui est apte à se déplacer par rapport à la partie fixe 2 dans le plan P. La partie fixe 2 est par exemple formée par des couches rapportées sur un substrat lors de étapes de fabrication de l'accéléromètre et la partie mobile est réalisée par gravure dans lesdites couches. La partie mobile 4 est mobile en rotation autour d'un axe orthogonal au plan du substrat. L'accéléromètre comporte des moyens de suspension 6 de la partie mobile 4 par rapport à la partie fixe 2. Les moyens de suspension 6 (figure 2) sont tels qu'ils autorisent les mouvements de rotation de la partie mobile 4 par rapport à la partie fixe. De préférence, les moyens de suspension 6 limitent au mieux le déplacement en translation dans le plan P de la partie mobile.

Le point d'intersection entre l'axe de rotation et le plan P est désigné O.

L'accéléromètre comporte également des moyens de détection 8 du déplacement en rotation de la partie mobile 4 par rapport à la partie fixe 2.

L'accéléromètre comporte également des moyens d'amortissement visqueux 10 du déplacement de la partie mobile 4 par rapport à la partie fixe 2.

Le centre de gravité G de la partie mobile 4 est distinct de l'axe de rotation comme cela est représenté sur la figure 2. Dans l'exemple particulier de la figure 1, la partie mobile 4 a avantageusement une forme de disque. Le décalage du centre de gravité G par rapport au point O est obtenu dans l'exemple d'une partie mobile 4 en réalisant un premier évidement 11 dans la partie mobile 4. Dans la représentation de la figure 1, le premier évidement 11 est réalisé dans la partie inférieure et le centre de gravité est déplacé vers la partie supérieure en éloignement de O.

Une partie mobile 4 en rotation en forme de disque facilite l'intégration des différents éléments de l'accéléromètre mais une partie mobile présentant une forme différente ne sort pas du cadre de la présente invention.

Dans l'exemple représenté, la partie fixe 2 comporte une portion disposée à l'intérieur de la partie mobile 4, désignée 2.1 (non représenté sur la figure 1), dans un second évidement 13 de la partie mobile 4 et une partie disposée à l'extérieur de la partie mobile, désignée 2.2. La forme du second évidement 13 pourrait participer au décalage entre le centre de gravité G et le point O à la place du premier évidement 11 ou en combinaison.

Dans l'exemple représenté, les moyens de suspension 6 sont disposés entre la partie mobile 4 et la portion intérieure 2.1 et les moyens d'amortissement 8 sont répartis entre la partie mobile 4 et la portion extérieure 2.2. Cette disposition n'est en aucun cas limitative et la disposition inverse est envisageable par exemple.

Dans l'exemple particulier des figures 1 et 2, la portion intérieure 2.1 a la forme générale d'un papillon présentant un plan de symétrie passant par l'axe Y qui relie le point O et le centre de gravité G, la partie mobile 4 présente un évidement 12 de forme correspondante. Cette forme de la portion intérieure est également non limitative.

Dans l'exemple représenté, les moyens de suspension comportent deux poutres 14 s'étendant symétriquement à partir du point O vers la portion intérieure 2.1 de manière symétrique par rapport à l'axe Y. Les deux poutres 14 forment une liaison pivot entre la partie mobile 4 et la portion intérieure 2.1 de la partie fixe 2 tout en limitant le déplacement en translation de la partie mobile 4 dans le plan P.

Dans l'exemple représenté et de manière avantageuse, les moyens de détection sont de type piézorésistif. Ils comportent deux jauges piézorésistives 8.1 s'étendant entre la partie mobile 4 et la portion intérieure 2.1. Les jauges 8.1 sont disposées de préférence symétriquement par rapport à l'axe Y et sont disposées en général près du centre de gravité G, comme dans l'exemple représenté. De préférence les jauges 8.1 présentent une épaisseur faible rapport à celle de la partie mobile, de sorte à assurer une concentration des contraintes.

De manière très avantageuse, les jauges 8.1 s'étendent selon un axe perpendiculaire à l'axe Y ce qui permet de maximiser les effets des accélérations sur les jauges. Les jauges sont montées de préférence en différentiel. Des moyens de détection ne comportant qu'une jauge ne sortent pas du cadre de la présente invention.

De manière avantageuse et comme cela est représenté, la portion intérieure 2.1 comporte six pistes électriquement indépendantes Z1, Z2, Z3, Z4, Z5, Z6. Chaque poutre 12 est ancrée sur une piste Z1 et Z2. La mise en oeuvre de ces six zones permet une mesure de type « 4 fils » pour chacune des jauges. Le principe de la mesure 4 fils consiste à imposer une tension et mesurer un courant (ou l'inverse) aux bornes d'une résistance en utilisant deux plots pour le courant et deux plots pour la tension. Ce type de mesure permet de s'affranchir des résistances parasites des pistes d'accès : il n'y a pas de chutes de tension sur les pistes d'accès dédiées à la tension car le courant y est très faible. Dans l'exemple représenté, les pistes Z3 et Z5 et Z4 et Z6 sont reliées par piste commune, à proximité immédiate des jauges, mais cette portion de quelques microns de longueur est largement négligeable par rapport à la longueur totale des pistes d'accès, qui ont une longueur de plusieurs centaines de microns de pistes métalliques sans compter les interconnexions vers l'électronique. Cette piste commune ne gêne pas la mesure de type 4 fils.

Les moyens de détection de type piézorésistif présentent une meilleure linéarité que les moyens de détection de type capacitif, ce qui permet de minimiser les effets de rectification.

De préférence, la partie mobile 4 et la portion extérieure 2.2 de la partie fixe 2 sont connectées au même potentiel pour éviter l'apparition d'effets électrostatiques auxquels une telle structure peut être sensible.

Les moyens d'amortissement visqueux vont maintenant être décrits. Dans l'exemple représenté et de manière avantageuse, il s'agit de peignes interdigités 16, 18, le ou les peignes 16 étant fixes par rapport à la portion extérieure 2.2 de la partie fixe 2 et le ou les peignes 18 étant solidaires en mouvement de la partie mobile. Les moyens d'amortissement sont dans l'exemple représenté et de manière très avantageuse à variation d'entrefer, ils offrent un plus grand amortissement que des moyens d'amortissement à peignes à variation de surface, mais de tels moyens d'amortissement sont néanmoins envisageable et seront décrits ci-dessous.

De manière avantageuse, la partie mobile 4 présente des doigts 20 sur toute la circonférence extérieure de la partie mobile 4 et des doigts 22 bordent tout le bord de la portion extérieure 2.2 en regard de la circonférence extérieure de la partie mobile 4.

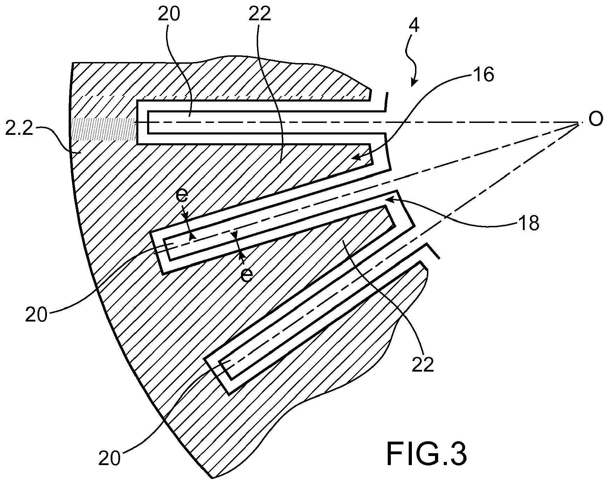

Les doigts 20 forment un peigne unique annulaire et les doigts 22 forment un peigne unique. Chaque doigt 20 du peigne 18 est reçu entre deux doigts 22 du peigne 16 et inversement. Sur la figure 3, on peut voir une représentation schématique d'une vue de détail de ces moyens d'amortissement, cette représentation n'étant pas à l'échelle.

De préférence, les doigts du peigne 18 s'étendent radialement sur la circonférence de la partie mobile 4. Ainsi toute la force s'appliquant sur les doigts participe à l'amortissement sinon seule la composante orthogonale au diamètre de la partie mobile est efficace.

De préférence, les doigts 20 du peigne 18 sont tous identiques. Dans l'exemple représenté les doigts 20 ont une forme rectangulaire mais il sera compris que des doigts présentant d'autres formes, par exemple une forme trapézoïdale ne sort pas du cadre de la présente invention. Les doigts 22 ont une forme telle que les faces en regard des doigts 20 et 22 sont sensiblement parallèles.

Il sera compris que l'on peut prévoir des doigts sur une zone angulaire seulement de la circonférence de la partie mobile 4. En variante on peut prévoir plusieurs peignes sur la circonférence de la partie mobile 4 répartis de manière quelconque. En outre, les doigts peuvent avoir des dimensions différentes.

De préférence, les moyens d'amortissement comportent des paires de peignes disposés de manière diamétralement opposée par rapport au point O et avantageusement ces peignes ont le même nombre de doigts et la même surface en regard. Chaque paire applique à la partie mobile 4, plus particulièrement au point O un couple d'amortissement qui est d'autant plus important que le bras de levier est grand.

De manière similaire sur la portion extérieure 2.2 les doigts 22 sont de préférence sensiblement toutes identiques.

En symétrisant les moyens d'amortissement, un amortissement homogène et équilibré est appliqué au centre de rotation de la partie mobile.

Le fonctionnement de ces moyens d'amortissement est le suivant :
Le mouvement entre les deux peignes 16, 18 interdigités génère des effets visqueux dans le fluide environnant les peignes. Le fluide est « écrasé » entre les doigts des peignes, ce qui induit en retour une force d'amortissement qui est proportionnelle à la vitesse du peigne et qui s'oppose au mouvement. Ainsi les hautes fréquences peuvent être filtrées.

Les effets d'amortissement générés par les différents doigts s'ajoutent, l'amortissement est alors d'autant plus prononcé que les peignes sont nombreux et de grande taille.

De préférence, la distance entre les faces en regard de deux doigts est faible, cette distance e peut être désignée « épaisseur du film de fluide ». L'amortissement est d'autant plus important que cette distance est faible. De manière avantageuse, l'épaisseur e de film de fluide est constante de part et d'autre de chaque doigt, et encore plus avantageusement pour tous les doigts. Cette épaisseur est considérée lorsque la partie mobile est au repos, car au cours d'une détection les doigts de la partie mobile se déplacent entre deux doigts et la distance entre un doigt fixe 22 et un doigt mobile 20 varie au cours du déplacement.

De préférence également, on cherche à réaliser des peignes avec une grande surface, i.e. la surface de chaque doigt en regard d'un autre doigt.

L'amortissement est d'autant plus important que le nombre de doigts interdigités est important. L'accéléromètre de la figure 1 présente avantageusement une occupation optimisée de l'espace par les doigts interdigités qui sont répartis sur toute la circonférence de la partie mobile.

Comme décrits ci-dessus, les moyens de détection peuvent être de type capacitif. On peut envisager que les peignes interdigités soient utilisés comme moyens de détection, ceux-ci étant alors polarisés. Néanmoins il est préférable de réaliser des moyens de détection distincts des moyens d'amortissement ce qui permet d'optimiser séparément les moyens de détection et les moyens d'amortissement.

En outre dans l'exemple représenté mettant en oeuvre des moyens de détection de type piézorésistif, les moyens de détection occupent un emplacement différent de celui occupé par les moyens d'amortissement, ce qui permet d'optimiser l'occupation de l'espace et de limiter l'encombrement de l'accéléromètre.

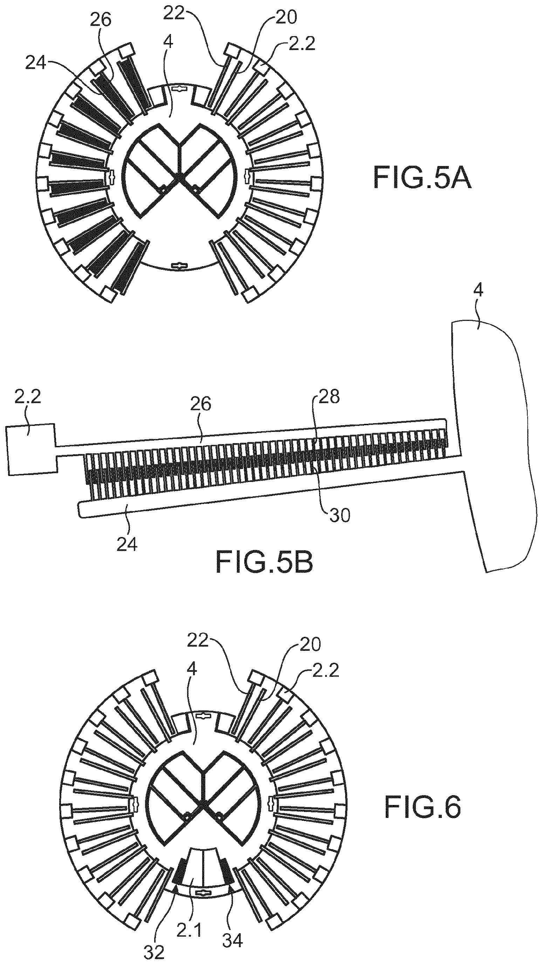

Selon une variante de réalisation, les moyens de détection pourraient être de type capacitif. Sur les figures 5A et 5B, on peut voir un exemple de réalisation d'un accéléromètre à détection capacitive.

Les moyens de détection sont formés par des paires de peignes 24, 26 interdigités, un peigne 24 de chaque paire étant solidaire en mouvement de la partie mobile 4 et l'autre peigne 26 est fixe par rapport à la partie fixe, plus particulièrement de la portion extérieure 2.2, les doigts 28, 30 s'étendant perpendiculairement au rayon de la partie mobile. Dans l'exemple représenté et de préférence, la détection est réalisée par variation de surface.

La partie mobile est entourée en partie par des moyens d'amortissement avec des doigts 20, 22 en regard tels que décrits ci-dessus et en partie par des moyen de détection capacitifs.

Dans une variante représentée sur la figure 6, les moyens de détection capacitifs sont disposés entre la partie mobile et la portion intérieure fixe 2.1 et comportent deux paires de peignes interdigités 32, 34 à variation de surface. Dans cette variante, les moyens d'amortissement sont similaires à ceux de l'accéléromètre à détection piézorésistive de la figure 1.

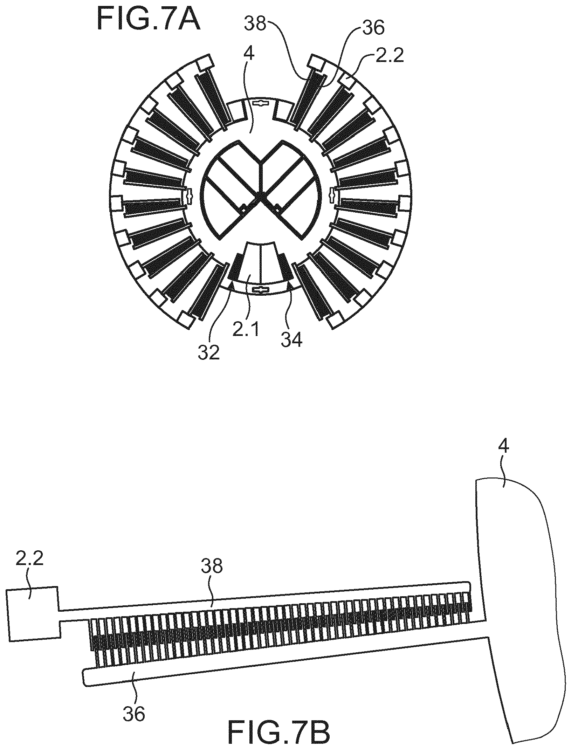

Sur les figures 7A et 7B, on peut voir une structure dans lequel les moyens d'amortissement sont réalisés par des peignes interdigités 36, 38 à variation de surface similaire à ceux utilisés pour la détection capacitive sur les figures 5A et 5B. Des peignes 36 sont réparties sur toute la périphérie de la partie mobile 4 et des peignes 38 sont fixes par rapport à la portion extérieure 2.2. La détection est réalisée par deux paires de peignes interdigités 32, 34 comme ceux de la figure 6. En variante, la détection pourrait être piézorésistive voire piézoélectrique.

Ces exemples de réalisation présentent l'avantage d'avoir des moyens de détection distincts des moyens d'amortissement.

Dans un exemple de réalisation avantageux, l'accéléromètre comporte un capot assurant une protection de la structure mécanique. En outre, le capot peut permettre de délimiter un volume étanche autour de la structure mécanique qui peut être rempli d'un fluide dont on peut ajuster la viscosité, qui intervient dans le niveau d'amortissement. Par exemple on peut remplir le volume avec de l'air sous pression ou avec un fluide offrant une viscosité supérieure à celle de l'air, tel que le xénon. En variante, le volume pourrait être rempli avec un liquide augmentant encore l'effet d'amortissement.

Un exemple de dimensionnement va maintenant être donné.

La partie mobile a par exemple un rayon compris entre 100 µm et 1000 µm.

Les doigts d'amortissement ont une longueur par exemple comprise entre 10 µm et 500 µm.

Au repos, la distance e entre les faces en regard des doigts de la partie mobile et de la portion extérieure est par exemple comprise entre 0,1 µm et 10 µm

L'épaisseur de la structure est par exemple comprise entre 10 µm et 100 µm.

Les poutres d'articulation formant le pivot entre la partie mobile 4 et la portion intérieure 2.1 ont par exemple une largeur comprise entre 0,1 µm et 10 µm et une longueur comprise entre 1 µm et 100 µm.

Le rayon de l'évidement de la partie mobile logeant la portion intérieure est par exemple comprise entre 50 µm et 300 µm.

La dynamique de fonctionnement d'un tel accéléromètre est déterminée par la contrainte maximale au niveau des jauges d'une part et le bruit limitant d'autre part. La dynamique se calcule avec le rapport signal max / signal min.

Le signal max est limité par la contrainte dans les jauges et le signal min est limité par la résolution du système, i.e. le bruit limitant.

Si on limite la contrainte dans les jauges à 100 MPa et en considérant que la gamme d'accélération pouvant être mesurée peut être ajustée de 2mg - 10g, ou 20mg - 100g, par exemple, en choisissant la position du centre de gravité. Typiquement, cette dynamique est de 5000 = 10/0,002 ou 5000 = 100/0,020, selon les arrangements.

Par exemple, grâce à l'invention, il est possible en considérant une partie mobile de masse comprise entre 10⁻⁹ et 10⁻⁷ kg d'obtenir une fréquence de coupure pouvant être abaissée au moins jusqu'à 1 Hz.

La fréquence de coupure peut s'écrire fc=1/2π * C/Γ avec C la raideur angulaire et Γ l'amortissement angulaire.

Il est à noter que l'ajout de moyens d'amortissement a pour effet d'augmenter le bruit thermomécanique qui est proportionnel à Γ^{1/2}/m (m étant la masse de la partie mobile de l'accéléromètre). Le bruit thermomécanique augmente avec l'amortissement. Par conséquent si une fréquence de coupure basse est souhaitée, cela implique un fort amortissement qui peut générer un bruit thermomécanique diminuant la résolution de l'accéléromètre. En choisissant de manière adaptée le dimensionnement de l'accéléromètre, i.e. en choisissant une masse suffisamment grande, par exemple comprise entre 10⁻⁹ kg et 10⁻⁷ kg il est alors possible d'obtenir une fréquence de coupure et de s'affranchir au moins en partie du bruit thermomécanique.

Γ peut être compris entre 10⁻¹⁴ N.m.s, ce qui correspond à un amortissement faible, et 10⁻⁸ N.m.s, ce qui correspond à un amortissement fort.

Le fonctionnement de l'accéléromètre va maintenant être décrit :
Lorsque l'accéléromètre est soumis à une accélération, la structure mobile est soumise à une force uniformément répartie sur la structure. Cette force peut être décrite par une force ponctuelle au niveau du centre de gravité de la partie mobile. Sous l'action de cette force, la partie mobile se déplace en rotation par rapport à la partie fixe, solidaire du substrat, autour de l'axe de rotation défini par les poutres de suspension. L'amplitude de ce déplacement est déterminée par les phénomènes visqueux qui apparaissent principalement au niveau des moyens d'amortissement.

La fréquence de coupure est réglée grâce au niveau d'amortissement appliquée à la partie mobile comme expliquée ci-dessus.

Si la fréquence du signal est inférieure à la fréquence de coupure de l'accéléromètre, l'amplitude du déplacement n'est pas réduite (signal d'intérêt). Si la fréquence du signal est supérieure à la fréquence de coupure du MEMS, l'amplitude du déplacement est fortement diminuée.

Dans les deux cas, le déplacement de la partie mobile est détecté par les moyens de détection, dans l'exemple représenté sur les figures 1 et 2 le déplacement induit des contraintes dans la (ou les) jauge piézorésistive(s).

La variation de résistance est lue par une électronique dédiée qui la traite et délivre le signal de sortie permettant d'obtenir l'accélération détectée.

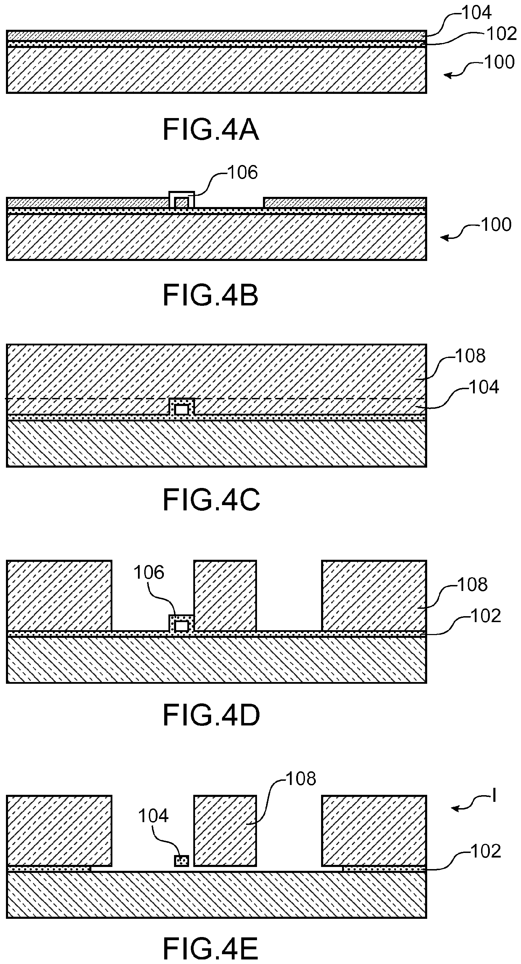

Un exemple de procédé de fabrication d'un accéléromètre selon l'invention va maintenant être décrit en relation avec les figures 4A à 4J.

D'une part, on réalise un premier sous-ensemble sur le substrat support (Fig. 4A à 4E).

Sur un premier substrat 100, dit support, qui pourra être en matériau semi-conducteur, en Silicium par exemple, on réalise un dépôt d'une couche sacrificielle 102. Cette couche diélectrique pourra être avantageusement en oxyde de silicium déposée par dépôt chimique en phase vapeur assisté par plasma (PECVD pour Plasma Enhanced Chemical Vapor Deposition en terminologie anglo-saxonne), dépôt chimique en phase vapeur à faible pression (LPCVD pour Low-Pressure Chemical Vapor Déposition: en terminologie anglo-saxonne) ou par oxydation thermique. Son épaisseur pourra être comprise entre quelques centaines de nanomètres et quelques microns, 5 µm par exemple. On dépose ensuite une couche de matériau conducteur 104 préférentiellement à base de Si ou SiGe et d'épaisseur comprise par exemple entre 200 nm et 5 µm. On peut également partir d'un substrat de type SOI (Silicon on Insulator).

L'élément ainsi formé est représenté sur la figure 4A.

Lors d'une étape suivante, on réalise une lithographie et une gravure pour définir la jauge, puis on dépose une couche diélectrique 106 de même nature que précédemment, avantageusement du dioxyde de silicium.

L'élément ainsi formé est représenté sur la figure 4B.

Lors d'une étape suivante, on forme une couche de silicium 108 par exemple par dépôt LPCVD ou PECVD sur la couche 104 et sur la couche sacrificielle, sur une épaisseur par exemple comprise entre 5 µm et 50 µm.

L'élément ainsi formé est représenté sur la figure 4C.

Puis on effectue une gravure de celle-ci, par exemple par RIE (Reactive ion etching en terminologie anglo-saxonne) ou DRIE (Deep reactive ion etching en terminologie anglo-saxonne). L'élément ainsi formé est représenté sur la figure 4D.

Lors d'une étape suivante, l'élément sensible et la jauge sont libérées par gravure des couches sacrificielles, par exemple par du fluorure d'hydrogène sous forme vapeur.

L'élément ainsi formé est représenté sur la figure 4E.

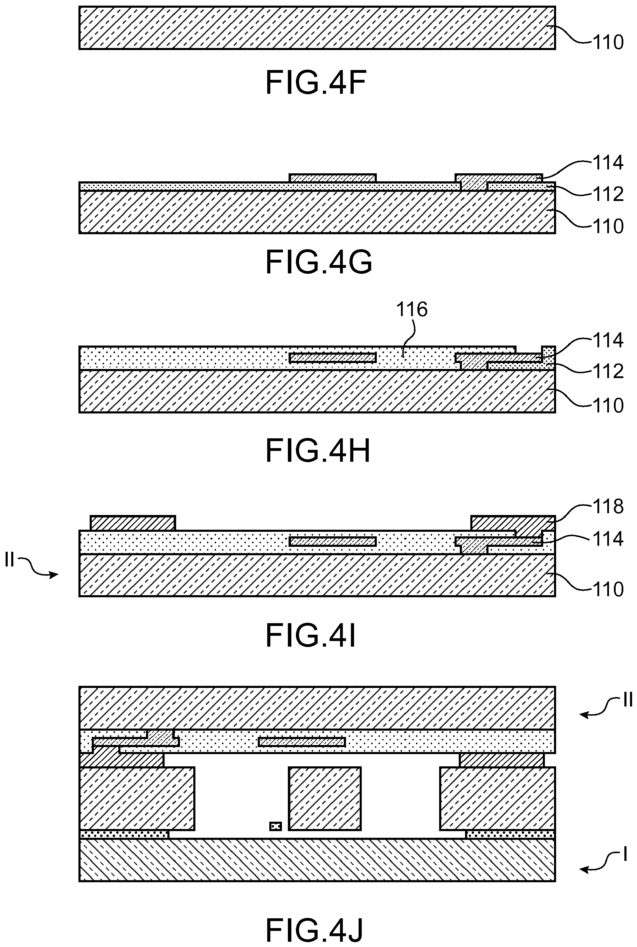

D'autre part, on réalise un deuxième sous-ensemble sur le substrat (Fig. 4F à 4I).

On part d'un substrat 110 par exemple en silicium. L'élément ainsi formé est représenté sur la figure 4F.

On forme ensuite une couche 112 de matériau diélectrique ayant une épaisseur par exemple de quelques dizaines de nanomètres à quelques µm. Cette couche diélectrique 112 peut être par exemple un oxyde de silicium, déposé par PECVD, LPCVD ou par oxydation thermique. On définit par une lithographie et une gravure de la couche 112 une ouverture dans la couche 112. On forme ensuite une couche conductrice 114, par exemple du AISi, d'épaisseur variant par exemple de quelques centaines de nanomètres à quelques µm, réalisée par dépôt par pulvérisation cathodique par exemple (PVD) ou par évaporation. On réalise ensuite une lithographie et une gravure de la couche conductrice, par exemple par RIE.

L'élément ainsi formé est représenté sur la figure 4G.

On forme ensuite une couche 116 de matériau diélectrique ayant une épaisseur par exemple de quelques dizaines de nanomètres à quelques µm. Cette couche est ouverte via lithographie/gravure. Cet ensemble d'étapes technologiques peut être répété afin de réaliser un ou plusieurs niveaux d'interconnexions.

L'élément ainsi réalisé est représenté sur la figure 4H.

On pourra avantageusement choisir pour la dernière couche conductrice un matériau de conduction permettant de réaliser en parallèle un scellement de ce substrat capot avec le substrat support. Ce matériau dépendra alors de la technique de scellement choisie, scellement eutectique, thermocompression par exemple. A titre d'exemple, nous avons pris le cas d'un scellement réalisé par formation d'alliage eutectique aussi

Sur la figure 4I nous avons représenté des cordons de scellement 118 en Au réalisés avec les étapes de technologique déjà présentées précédemment.

On assemble ensuite les deux sous-ensembles A et B de sorte que les contacts du sous-ensemble B soient en contact avec les parois des cavités du sous-ensemble A. Dans l'exemple choisi l'assemblage se fait par scellement eutectique entre les cordons de scellement en Au présentes sur le substrat capot et le Si du substrat support.

L'élément ainsi formé est représenté sur la figure 4J.

L'accéléromètre selon l'invention présentant une faible bande passante et peu sensible aux vibrations est particulièrement adapté à des applications industrielles, dans le domaine automobile et dans le domaine spatial.

## Revendications

1. Accéléromètre linéaire comportant :
- une partie fixe (2),
- une partie mobile (4) en rotation dans le plan de l'accéléromètre autour d'un axe de rotation orthogonal au plan (P) de l'accéléromètre, la partie mobile (4) comportant un centre de gravité (G) distinct du point (O) d'intersection de l'axe de rotation et du plan (P) de l'accéléromètre,
- des moyens de suspension entre la partie mobile et la partie fixe, formant une liaison pivot entre la partie mobile(4) et la partie fixe (2) et limitant des déplacements en translation de la partie mobile (4) par rapport à la partie fixe (2),
- des moyens de détection (8) du déplacement de la partie mobile (4) par rapport à la partie fixe (2),
- des moyens d'amortissement visqueux (10) du déplacement de la partie mobile (4) dans ledit plan (P), lesdits moyens d'amortissement visqueux (10) comportant des peignes interdigités (16, 18), au moins un premier peigne (18) sur la partie mobile (4) et au moins un deuxième peigne (16) sur la partie fixe (2), le premier peigne (18) et le deuxième peigne (16) étant interdigités et le premier peigne (18) et le deuxième peigne (16) étant au même potentiel électrique.

2. Accéléromètre linéaire selon la revendication 1, dans lequel les moyens de détection (8) sont distincts des moyens d'amortissement visqueux (10).

3. Accéléromètre linéaire selon la revendication 1 ou 2, dans lequel la partie fixe (2) comporte au moins une portion extérieure (2.2) entourant la partie mobile (4) et dans lequel les moyens d'amortissement visqueux (10) bordent une partie au moins de la périphérie de la partie mobile (4).

4. Accéléromètre linéaire selon la revendication 3, dans lequel les moyens d'amortissement visqueux (10) bordent toute la périphérie de la partie mobile (4).

5. Accéléromètre linéaire selon l'une des revendications 1 à 4, dans lequel ledit au moins second peigne de la partie fixe (2) et ledit au moins premier peigne de la partie mobile (4) sont au même potentiel électrique.

6. Accéléromètre linéaire selon l'une quelconque des revendications 1 à 5, dans lequel la partie mobile (4) a une forme de disque et dans lequel le premier peigne (18) comporte des doigts (20) s'étendant radialement vers l'extérieur de la partie mobile (4) et le deuxième peigne (16) comporte des doigts (22) s'étendant radialement d'une portion extérieure (2.2) de la partie fixe (2) vers la partie mobile (4).

7. Accéléromètre linéaire selon la revendication 6, dans lequel les doigts (20) du premier peigne (18) et les doigts (22) du deuxième peigne (16) sont tels qu'ils présentent une symétrie centrale par rapport à l'axe de rotation de la partie mobile (4).

8. Accéléromètre linéaire selon la revendication 6 ou 7, dans lequel, chaque doigt de la partie mobile comportant au moins deux faces, chaque face étant en regard d'une face d'un doigt de la partie fixe et à une distance donnée de celle-ci, en position repos de la partie mobile la distance donnée est identique pour les deux faces du doigt.

9. Accéléromètre linéaire selon l'une des revendications 3 à 8, dans lequel la partie mobile (4) comporte un évidement (13) et la partie fixe (2) comporte une portion intérieure (2.1) disposée dans ledit évidement (13) et tout ou partie des moyens de suspension suspendent la partie mobile (4) à la portion intérieure (2.1) de la partie fixe (2).

10. Accéléromètre linéaire selon la revendication 9, dans lequel les moyens de suspension comportent au moins deux poutres (14) s'étendant entre la partie mobile (4) et la portion intérieure (2.1), lesdites poutres (114) s'étendant selon deux directions faisant un angle non nul, compris entre 0° et 180° et avantageusement égal à 90°, lesdites directions se croissant sensiblement au point d'intersection (O) de l'axe de rotation et du plan de l'accéléromètre.

11. Accéléromètre linéaire selon l'une des revendications 1 à 10, dans lequel les moyens de détection (8) sont des moyens piézorésistifs.

12. Accéléromètre linéaire selon l'une quelconque des revendications 1 à 11, dans lequel les moyens de détection (8) comportent au moins deux jauges (8.1) montées en différentielle, lesdites jauges (8.1) étant alignées le long d'un axe perpendiculaire à un axe (Y) passant par le centre de gravité (G) de la partie mobile (4) et le point d'intersection (O) de l'axe de rotation et du plan de l'accéléromètre.

13. Accéléromètre linéaire selon la revendication 12 en combinaison avec la revendication 9 ou 10, dans lequel la portion intérieure (2.1) de la partie fixe (2) comporte plusieurs zones électriquement indépendantes (Z3, Z4, Z5, Z6) permettant une mesure « 4 fils » des résistances des jauges (8.1).

14. Accéléromètre linéaire selon l'une des revendications 1 à 13, comportant une cavité dans laquelle sont logées la partie mobile (4) et la partie fixe (2) et dans laquelle le niveau de pression est contrôlé.

15. Accéléromètre linéaire selon la revendication 14, dans lequel la cavité est remplie d'un gaz neutre visqueux, par exemple du xénon ou de l'argon.

## Patentansprüche

1. Linearbeschleunigungsmesser, aufweisend:
einen feststehenden Teil (2),
einen beweglichen Teil (4), wobei dieser in der Ebene des Beschleunigungsmessers um eine zur Ebene (P) des Beschleunigungsmessers senkrechte Rotationsachse drehbar ist, wobei der bewegliche Teil (4) einen Schwerpunkt (G) aufweist, der vom Schnittpunkt der Drehachse und
der Ebene (P) des Beschleunigungsmessers verschieden ist,
Aufhängungseinrichtungen zwischen dem beweglichen Teil und dem feststehenden Teil, die eine Drehverbindung zwischen dem beweglichen Teil (4) und dem feststehenden Teil (2) bilden und translative Verschiebungen des beweglichen Teils (4) bezüglich des feststehenden Teils (2) begrenzen,
Einrichtungen zur Detektion (8) der Verschiebung des beweglichen Teils (4) bezüglich des feststehenden Teils (2),
Einrichtungen zur viskosen Dämpfung (10) der Verschiebung des beweglichen Teils (4) in der Ebene (P), wobei die Einrichtungen zur viskosen Dämpfung (10) ineinandergreifende Kämme (16, 18) aufweisen, und zwar mindestens einen ersten Kamm (18) auf dem beweglichen Teil (4) und mindestens einen zweiten Kamm (16) auf dem feststehenden Teil (2), wobei der erste Kamm (18) und der zweite Kamm (16) ineinandergreifend angeordnet sind und der erste Kamm (18) und der zweite Kamm (16) sich auf dem gleichen elektrischen Potenzial befinden.

2. Linearbeschleunigungsmesser nach Anspruch 1, wobei die Einrichtungen zur Detektion (8) von den Einrichtungen zur viskosen Dämpfung (10) verschieden sind.

3. Linearbeschleunigungsmesser nach Anspruch 1 oder 2, wobei der feststehende Teil (2) mindestens einen äußeren Abschnitt (2.2) aufweist, der den beweglichen Teil (4) umgibt, und wobei die Einrichtungen zur viskosen Dämpfung (10) zumindest einen Teil des Umfangs des beweglichen Teils (4) einfassen.

4. Linearbeschleunigungsmesser nach Anspruch 3, wobei die Einrichtungen zur viskosen Dämpfung (10) den gesamten Umfang des beweglichen Teils (4) einfassen.

5. Linearbeschleunigungsmesser nach einem der Ansprüche 1 bis 4, wobei der zumindest zweite Kamm des feststehenden Teils (2) und der zumindest erste Kamm des beweglichen Teils (4) sich auf dem gleichen elektrischen Potenzial befinden.

6. Linearbeschleunigungsmesser nach einem der Ansprüche 1 bis 5, wobei der bewegliche Teil (4) scheibenförmig ist und wobei der erste Kamm (18) Finger aufweist, die sich von dem beweglichen Teil (4) radial nach außen erstrecken und der zweite Kamm (16) Finger (22) aufweist, die sich von einem äußeren Abschnitt (2.2) des feststehenden Teils (2) hin zu dem beweglichen Teil (4) in radialer Richtung erstrecken.

7. Linearbeschleunigungsmesser nach Anspruch 6, wobei die Finger (20) des ersten Kamms (18) und die Finger (22) des zweiten Kamms (16) derart beschaffen sind, dass sie eine Zentralsymmetrie bezüglich der Drehachse des beweglichen Teils (4) aufweisen.

8. Linearbeschleunigungsmesser nach Anspruch 6 oder 7, wobei jeder Finger des beweglichen Teils mindestens zwei Flächen aufweist, wobei sich jede Fläche gegenüberliegend einer Fläche eines Fingers des feststehenden Teils und in einem gegebenen Abstand von dieser befindet, und in der Ruheposition des beweglichen Teils der gegebene Abstand für die zwei Flächen des Fingers identisch ist.

9. Linearbeschleunigungsmesser nach einem der Ansprüche 3 bis 8, wobei der bewegliche Teil (4) eine Aussparung (13) aufweist und der feststehende Teil (2) einen inneren Abschnitt (2.1) aufweist, der in der Aussparung (13) angeordnet ist, und die Aufhängungseinrichtungen, insgesamt oder teilweise, den beweglichen Teil (4) an dem inneren Abschnitt (2.1) des feststehenden Teils (2) aufhängen.

10. Linearbeschleunigungsmesser nach Anspruch 9, wobei die Aufhängungseinrichtungen mindestens zwei Träger (14) aufweisen, die sich zwischen dem beweglichen Teil (4) und dem inneren Abschnitt (2.1) erstrecken, wobei die Träger (114) sich gemäß zwei Richtungen erstrecken, die einen nicht Null betragenden Winkel bilden, der zwischen 0° und 180° liegt und vorteilhaft gleich 90° ist, wobei diese Richtungen sich im Wesentlichen im Schnittpunkt (O) der Drehachse und der Ebene des Beschleunigungsmessers kreuzen.

11. Linearbeschleunigungsmesser nach einem der Ansprüche 1 bis 10, wobei die Detektionseinrichtungen (8) piezoresistive Einrichtungen sind.

12. Linearbeschleunigungsmesser nach einem der Ansprüche 1 bis 11, wobei die Detektionseinrichtungen (8) mindestens zwei differentiell montierte Messeinrichtungen (8.1) aufweisen, wobei die Messeinrichtungen (8.1) entlang einer Achse ausgerichtet sind, die senkrecht zu einer Achse (Y) ist, welche durch den Schwerpunkt (G) des beweglichen Teils (4) und den Schnittpunkt (O) der Drehachse und der Ebene des Beschleunigungsmessers verläuft.

13. Linearbeschleunigungsmesser nach Anspruch 12 in Kombination mit Anspruch 9 oder 10, wobei der innere Abschnitt (2.1) des feststehenden Teils (2) mehrere elektrisch unabhängige Zonen (Z3, Z4, Z5, Z6) aufweist, die eine "4-Adern"-Messung der Widerstände der Messeinrichtungen (8.1) ermöglichen.

14. Linearbeschleunigungsmesser nach einem der Ansprüche 1 bis 13, aufweisend einen Hohlraum, in dem der bewegliche Teil (4) und der feststehende Teil (2) untergebracht sind und in dem der Druckpegel gesteuert wird.

15. Linearbeschleunigungsmesser nach Anspruch 14, wobei der Hohlraum mit einem viskosen neutralen Gas angefüllt ist, beispielsweise Xenon oder Argon.

## Claims

1. Linear accelerometer comprising:
- a fixed part (2),
- a rotationally moving part (4) in a plane of the accelerometer around an axis of rotation orthogonal to the plane (P) of the accelerometer, the moving part (4) comprising a centre of gravity (G) distinct from a point of intersection (O) of the axis of rotation and the plane (P) of the accelerometer,
- suspension means between the moving part and the fixed part, forming a pivot link between the moving part (4) and the fixed part (2) and limiting translational displacements of the moving part (4) with respect to the fixed part (2),
- detection means (8) for detecting the displacement of the moving part (4) with respect to the fixed part (2),
- viscous damping means (10) for damping the displacement of the moving part (4) in said plane (P), said viscous damping means (10) comprising interdigitated combs (16, 18), at least one first comb (18) on the moving part (4) and at least one second comb (16) on the fixed part (2), the first comb (18) and the second comb (16) being interdigitated and the first comb (18) and the second comb (16) being at the same electric potential.

2. Linear accelerometer according to claim 1, wherein the detection means (8) are distinct from the viscous damping means (10).

3. Linear accelerometer according to claim 1 or 2, wherein the fixed part (2) comprises at least one outer portion (2.2) surrounding the moving part (4) and wherein the viscous damping means (10) line a part at least of a periphery of the moving part (4).

4. Linear accelerometer according to claim 3, wherein the viscous damping means (10) line the whole periphery of the moving part (4).

5. Linear accelerometer according to any of claims 1 to 4, wherein said at least second comb of the fixed part (2) and said at least first comb of the moving part (4) are at a same electrical potential.

6. Linear accelerometer according to any of claims 1 to 5, wherein the moving part (4) has a disc shape and wherein the first comb (18) comprises fingers (20) extending radially towards an outside of the moving part (4) and the second comb (16) comprises fingers (22) extending radially from an outer portion (2.2) of the fixed part (2) to the moving part (4).

7. Linear accelerometer according to claim 6, wherein the fingers (20) of the first comb (18) and the fingers (22) of the second comb (16) are such that they have a central symmetry with respect to the axis of rotation of the moving part (4).

8. Linear accelerometer according to claim 6 or 7, wherein, each finger of the moving part comprising at least two faces, each face facing one face of a finger of the fixed part and at a given distance therefrom, at rest position of the moving part the given distance is identical for the two faces of the finger.

9. Linear accelerometer according to any of claims 3 to 8, wherein the moving (4) part comprises a recess (13) and the fixed part (2) comprises an inner portion (2.1) arranged in said recess (13) and all or part of the suspension means suspend the moving part (4) from the inner portion (2.1) of the fixed part (2).

10. Linear accelerometer according to claim 9, wherein the suspension means comprise at least two beams (14) extending between the moving part (4) and the inner portion (2.1), said beams (114) extending along two directions making a non-zero angle, comprised between 0° and 180°, said directions intersecting substantially at the intersection point (O) of the axis of rotation and the plane of the accelerometer.

11. Linear accelerometer according to any claims 1 to 10, wherein the detection means are piezoresistive means.

12. Linear accelerometer according to any of claims 1 to 11, wherein the detection means (8) comprise at least two gauges (8.1) mounted differentially, said gauges (8.1) being aligned along an axis perpendicular to an axis (Y) going through the centre of gravity (G) of the moving part (4) and the intersection point (O) of the axis of rotation and the plane of the accelerometer.

13. Linear accelerometer according to claim 12 in combination 9 or 10, wherein the inner portion (2.1) of the fixed part (2) comprises several electrically independent zones (Z1, Z2, Z3, Z4) enabling a "4-wire" measurement of the resistances of the gauges (8.1) .

14. Linear accelerometer according to any of claims 1 to 13, comprising a cavity in which the moving part (4) and the fixed part (2) are housed and in which the pressure level is controlled.

15. Linear accelerometer according to claim 14, wherein the cavity is filled with viscous neutral gas, for example xenon or argon.
